# EUROPEAN PATENT SPECIFICATION

(11) **EP 1 912 790 B1**
(45) Date of publication and mention of the grant of the patent: **05.12.2012**
(21) Application number: 06778200.3
(22) Date of filing: 08.08.2006
(51) Int. Cl.: B32B 27/32

(54) **MULTILAYER TUBE ASSEMBLY AND METHOD FOR PRODUCING THE SAME**
MEHRLAGIGE ROHRANORDNUNG UND HERSTELLUNGSVERFAHREN DAFÜR
ENSEMBLE TUBE MULTICOUCHE ET PROCEDE D'ELABORATION

(30) Priority: 11.08.2005 GR 20050100425
(43) Date of publication of application: 23.04.2008
(73) Proprietor: Halcor Metal Works S.A., Athen (GR)
(72) Inventor: BIRIS, John, GR-320 11 Inofyta Viotia (GR)
(74) Representative: TBK
(86) International application number: PCT/EP2006/065153
(87) International publication number: WO 2007/017508

(56) References cited:
- GB-A- 2 119 389
- US-A- 4 481 262
- US-A1- 2003 040 579
- DATABASE WPI Week 199251 Derwent Publications Ltd., London, GB; AN 1992-418454 XP002416104 & JP 04 312292 A (FURUKAWA ELECTRIC CO LTD) 4 November 1992 (1992-11-04)

## Description

### Field of the invention

The present invention relates to a multilayer tube assembly and a method for producing the same. In particular, the present invention relates to a multilayer tube assembly, which may be used in sanitary and heating installations. It may additionally be used to transfer water in cooling systems (fan-coolers and conditioners) in heating and cooling installations, without the risk of condensation (dew point phenomena) for highly energy-efficient cooling systems of buildings, as well as for the transfer of gases (coolants, fuels and natural gas).

### Related prior art

Tubes are known to be manufactured in seamless form, entirely out of pure copper (deoxidised with phosphorus),to be used in sanitary, air-conditioning, heating and cooling as well as gas transfer installations. The disadvantage of this method is as follows.
1) The heat dissipates easily to the environment, as copper has a high thermal conductivity, decreasing therefore the efficiency of central heating systems.
2) To attain the necessary robustness for use in water supply and heating systems, these tubes require increased mass of copper.
3) The tubes are not flexible, especially when bending is sought without the use of tools.
4) If the tube operates in humid environment, it may be externally attacked with the probability of tube wall perforations due to corrosion phenomena.
5) Finally, in fan-cooling systems it is possible to have formation of dew at the copper wall, a condition unfavourable with regard to the endurance of the tubes (corrosion phenomenon).

Copper tubes coated with a plastic mix are widely known today to be used for transfer of hot water in heating systems with a minimum thermal loss to the surrounding space. These are seamless copper tubes with PVC coating that is not adhered to the copper tube and bears grooves, in order to allow manual processing (i.e. bending) and minimises heat loss.

The disadvantages of this method are as follows.
1) The loose interface between the two independent constituent parts (copper and plastic) along with the air entrapped between the grooves decrease the efficiency of under-floor heating systems.
2) The installation time is increased as the plastic coating must be taken away in order for water-tight joints to be achieved.
3) The tubes are not flexible, especially when bending is sought without the use of tools.
4) If the tube operates in humid environment, the grooves of the plastic coating allow humidity to penetrate between the copper tube and the coating and may lead to corrosion phenomena.
5) Finally, in fan-cooling systems the creation of dew on the copper wall of the tubes is possible, an unfavourable event with regards to the endurance of the tubes (corrosion phenomena) and to the thermal efficiency of systems using such tubes.

Tubes are also known with a smooth plastic coating (without grooves) whose objective is the exchange of heat between the tube and its surroundings. The disadvantages of this method are as follows.
1) The loose interface between the two independent constituent parts (copper and plastic), where their separating surfaces allow air to be trapped between them decreasing the efficiency of under-floor heating systems.
2) The installation time is increased since the plastic coating requires to be taken away in order for water-tight joints to be achieved.
3) The tubes are not flexible, especially when bending is performed without the use of tools.

Furthermore, tubes made of plastic and aluminium according to the USA National Standard ASTM F 1335 are also known. They consist of multiple plastic layers (polyethylene or other types of plastic reinforced by multi-layer aluminium tubes). The product of this method is inferior to the one hereby suggested with regard to the following points.
1) The dimensional tolerance range (of the diameter and the wall) is greater, because the multiple plastic layers applied in a semi-fluid state result in non uniform distribution of the plastic mass. On the contrary, in the tube hereby suggested, the plastic layers are applied on the outside of an already formed metallic tube, with stricter dimensional tolerances, a fact that favouring uniform distribution of the plastic semi-fluid mass.
2) Due to the aforementioned disadvantage the water tightness of the joints of the installations is not ensured.
3) The required installation time is longer.
4) The operation of cooling, heating and hot water installations with the system made of plastic and aluminium is less reliable and has a shorter life span than the copper/plastic system due to the higher coefficient of thermal expansion (fatigue and loose joints phenomena).
5) They have a reduced ability to withstand sudden pressure increases or negative pressures of the system (water hammer or vacuum), because the metallic part on which their stress bearing ability depends (Aluminium) is welded, as well as because of the inferior mechanical features of welded aluminium as compared to copper, while the metallic part of the suggested product is homogeneous, seamless and resistant to water hammers.
6) They exhibit lower strength to hydrostatic sustained pressure due to their lower strength resulting from the welded metallic aluminium tube, as opposed to the uniform metallic wall of the copper tube of the suggested product.
7) The quality of the welded metallic tube is controlled with difficulty as far as the resultant fusion strength is concerned, so these tubes exhibit increased probability to develop welding failures (hidden defects), hence decreased local strength, while the copper tube can on the contrary be fully controlled with a highly reliable electronic system of. "eddy currents", which has excellent results in seamless tubes (100 % inspected tube).
8) Hot and cold pressure cycling leads to the delamination of the inner plastic coating from the aluminium reinforcement (e.g. during the supply of hot water (∼90 °C) which is caused by sudden changes of temperature between inner and outer walls due to the limited thermal conductivity of plastics, whereas the suggested product an the contrary does not have an inner insulating plastic layer.

JP 04 312 292 A relates to the provision of a heat insulating pipe which can be used for transferring fluid or gas high in temperature. For such a heat insulating pipe, the circumferential surface of a copper pipe is covered with a heat protecting layer made of highly foamed polyethylene. A foamed layer in an inorganic matter filled polyolefin family is disposed over the circumferential surface of the heat protection layer. A polyester tape is wound over the circumferential surface of the foamed layer in an inorganic matter filled polyolefin family while being overlapped by a quarter. An inorganic matter filled polymer protecting layer in a crimped pipe shape is disposed on the circumferential surface of the polyester tape. The foamed layer in an inorganic matter filled polyolefin family is made of foam the foam magnifying power of which is 30, wherein 120 parts of magnesium hydroxide by weight is blended with 100 parts of resin compound mainly composed of ethylene-acetic acid vinyl copolymer.

### SUMMARY OF THE INVENTION

The aim of the invention is to overcome the above disadvantages of the prior art.

It is therefore an object of the present invention to provide a multilayer tube assembly which attains improvement in the behaviour of both constituent parts against handling and speed of installation (e.g. bending, connecting, adjusting), as well as takes advantage of the combination of the optimum thermal and mechanical properties of both materials.

Moreover, it is an object of the present invention to provide the above-mentioned multilayer tube assembly which is resistant to high temperatures required by closed heating systems, namely temperatures higher than 95 °C and which withstands extreme working pressures required by gas transfer systems of 0.01 MPa up to larger than 1 MPa.

It is a further object of the present invention to provide a method for producing the multilayer tube assembly.

The above and other objects have been accomplished by a multilayer tube assembly comprising: a seamless copper tube (1) provided on its external surface with an oxide layer (2) having a thickness of 0.1 µm to 1 µm; at least one intermediate adhesive layer (3) on said oxide layer (2) consisting basically of LLD-PE and containing 1 wt.-% to 2 wt.-% of an additive metal deactivator; and at least one outer polymeric layer (4) provided on said intermediate adhesive layer (3) and consisting mainly of a high-molecular polymeric material and 2 wt.-% to 4 wt.-% of an additive flame retardant.

Furthermore, above and other objects have been accomplished by method for producing a multilayer tube assembly comprising the steps of: cleaning said seamless copper tube (1) with a petroleum-based agent; oxidising the external surface of said seamless copper (1) tube a) for multilayer tube assembly having an outer diameter less than 32 mm, in an atmosphere of nitrogen and air at a temperature range of 550 °C to 700 °C, or b) for multilayer tube assembly having an outer diameter larger than 32 mm, in atmospheric air at a temperature of 150 °C to 250 °C and in a flame station comprising multiple flame nozzles around the perimeter of said tube; extruding said intermediate adhesive layer (3) onto said seamless copper tube (1) at a temperature range of 200 °C to 230 °C; and extruding said outer polymeric layer (4) onto said intermediate adhesive layer (3) at a temperature range of 210 °C to 250 °C.

In a preferred embodiment the multilayer tube assembly has the surface roughness Rₐ of the oxide layer (2) is 200 nm to 900 nm.

In another preferred embodiment the oxide layer (2) is obtainable by a) oxidising a seamless copper tube (1) in an atmosphere of nitrogen and air at a temperature of 550 °C to 700 °C for multilayer tube assembly having an outer diameter less than 32 mm, or b) oxidising a seamless copper tube (1) in atmospheric air at a temperature of 150 °C to 250 °C and in a flame station comprising multiple flame nozzles around the perimeter of said tube, for multilayer tube assembly having an outer diameter larger than 32 mm.

It is moreover preferred that the intermediate adhesive layer (3) has a layer thickness in the range from 0.05 mm to 0.15 mm.

According to an aspect of the present invention the metal deactivator is a phenolic oxidant and the flame retardant is a triazine derivative.

According to another aspect of the present invention the outer polymeric layer has a layer thickness in the range from 1.5 mm to 5,1 mm.

In a special embodiment copper oxides are added to said outer polymeric layer (4) to augment the thermal conductivity of said outer polymeric layer to at least 90 W/mK.

In a further special embodiment external corrugations are formed in said outer polymeric layer (4) by a) specially designed extrusion dies, or b) the use of embossed rolls after extrusion has taken place.

### SHORT DESCRIPTION OF THE DRAWING

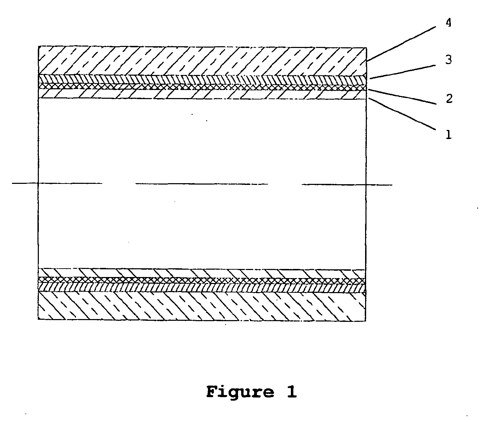

Figure 1 is a cross section showing a non-scale view of the multilayer tube assembly according to the present invention, wherein reference number 1 denotes the seamless copper tube, reference number 2 denotes the oxide layer, reference number 3 denotes the intermediate adhesive layer, and reference number 4 denotes the outer polymeric layer.

### DISCLOSURE OF THE INVENTION

### Production of the seamless copper tube (technological background falling outside the scope of the claims)

The raw material used for the formation of the seamless copper tube 1 are solid cylinders of pure copper (billets with 99.95 % Cu), which have been deoxidised by phosphorus. The billets are pre-heated at a temperature of approximately 900 °C to soften the copper material in order to be pliable. The pre-heated billets are then placed in a powerful press, where the solid billets, following a double action of the ram, are firstly pierced and then extruded to a straight length copper tube. The hot tube is immediately cooled down with water, to achieve room temperature.

Subsequently, successive drawing steps of the formed copper tube follow, through a series of dies with diameters smaller than that of the fed copper tubes, which results in reduction of the tube diameter following each pass. In order to thin in a controlled way at these stages, a tool is placed inside the tube, specially shaped in a manner that the developed frictional forces during drawing hold it steadily at a fixed point, where the tube is funnelled through the dies.

The above mentioned processes are performed in cold state (cold drawing) with the order as follows.

### A. Manufacturing of the copper tubes for flexible pancake coils or hard straight lengths, with dimensions of 10 mm to 26 mm in inner diameter and 0.20 mm to 0.60 mm in wall thickness:

Straight drawing of the tubes on a drawing bench, straight drawing in a Schumag type machine, straight drawing followed by coiling on a drum (bull block). At this point the tube is coiled in order to attain a circular shape (coils) for the easier transportation within the production area and it is then transferred to a similar drawing machine (horizontal bull block). From this point onwards, the transfer of each coiled tube within the production plant is made in baskets. A series of drawing passes follows, using drum type drawing machines (spinner blocks to final dimensions of {10 mm- 26 mm} × {0.20 mm- 0.60} mm), where the final dimensions of the tube to be transferred to the plastic coating department is attained

### B. Manufacturing of metal tubes for hard straight lengths with dimensions of 26.0 mm to 97.1 mm in inner diameter and 0.50 mm to 1.50 mm in wall thickness:

Straight drawing of tube on a drawing bench, straight drawing an a Schumag type machine, straight drawing in drawing benches using a tapered plug (mandrel) inside the tube, kept in fixed point in the tube (stationary mandrel) by the means of a rod. For easier transportation within the manufacturing site, the resulting straight lengths are cut in smaller pieces. The final dimensions of the straight lengths, transferred to the linear storage feeder, ahead of the plastic coating line, are {26 mm- 97.1 mm} x {0.50 mm- 1.50 mm}.

### Production of the multilayer tube assembly using a seamless copper tube 1 having an inner diameter of 10 mm to 26 mm and a wall thickness of 0.20 mm to 0.60 mm

A seamless copper tube 1 (dimensions are given in Table 1) is conveyed to an annealing furnace and heated inside the annealing furnace in an atmosphere of nitrogen and air to a temperature of 550 °C to 700 °C in order to oxidise the external surface. The thickness of the oxide layer 2 is from 0.1 µm to 1.0 µm.

At this step, the seamless copper tube 1 is also internally cleaned with blowing air therethrough. Moreover, the hardness of the seamless copper tube is reduced.

Preferably a difference in the annealing temperature is made between seamless copper tubes 1 produced in coils (annealing temperature 600 °C to 700 °C) and seamless copper tubes produced in straight lengths (annealing temperature 550 °C to 650 °C).

Subsequently the annealed seamless copper tube 1 having an oxide layer 2 on its external surface is sufficiently cooled in ambient atmosphere.

The seamless copper tube 1 is then passed through a first die, where an adhesive component is extruded at an extrusion temperature of 200 °C to 230 °C through a primary extruder onto the oxide layer 2 on the external surface of the seamless copper tube, in order to form an intermediate adhesive layer 3 having a thickness of 0.05 mm to 0.15 mm.

No forced cooling takes place after the extrusion of the intermediate adhesive layer 3.

The seamless copper tube 1 directly proceeds to the second die, where a polymeric component is extruded at an extrusion temperature of 210 °C to 250 °C through a secondary extruder onto the intermediate adhesive layer 3 formed in the above step, in order to form an outer polymeric layer 4. The thickness of the outer polymeric layer 4 is given in Table 2.

The second die is also called the finishing extrusion die, since it controls the final outer layer of multilayer tube assembly.

In a special embodiment, the adhesive component and the polymeric component may be co-extruded in a single extruder die.

In another special embodiment, copper oxides may be added to the outer polymeric layer 4 in order to augment its thermal conductivity up to at least 90 W/mK. The copper oxides may be incorporated in a polymeric carrier resin and may be added in the form of pellets to the polymeric component.

In a further special embodiment, external corrugations may be formed on the outer polymeric layer 4 of the multilayer tube assembly through a) specially designed extrusion dies, or b) through the use of embossed rolls after extrusion has taken place.

Subsequent to the final extrusion cooling of the multilayer tube assembly takes place in two stages. In the first stage, the multilayer tube assembly is cooled in a water bath at a water temperature of 30 °C to 50 °C, and in the second stage in a water bath at a water temperature of 8 °C to 10 °C.

After this controlled gradual cooling for the immediate hardening of the outer polymeric layer 4, the multilayer tube assembly is conveyed to a coiling system for the flexible tubes, or is cut and stocked in bundles of straight lengths for the hard tubes. The finished multilayer tube assembly may be tested electronically for possible defects (eddy currents).

**Table 1**

| multilayer tube assembly outer diameter (mm) | seamless copper tube inner diameter (mm) | seamless copper tube wall thickness (mm) |
|---|---|---|
| 14 | 10 | 0.20 - 0.30 |
| 15 | 11 | 0.20 - 0.30 |
| 16 | 12 | 0.20 - 0.35 |
| 18 | 14 | 0.25 - 0.35 |
| 20 | 16 | 0.25 - 0.35 |
| 22 | 18 | 0.25 - 0.35 |
| 26 | 20 | 0.30 - 0.45 |
| 28 | 22 | 0.30 - 0.45 |
| 32 | 26 | 0.40 - 0.60 |

**Table 2**

| multilayer tube assembly outer diameter (mm) | multilayer tube assembly total wall thickness (mm) | outer polymeric layer wall thickness (mm) |
|---|---|---|
| 14 | 2.0 | 1.50 - 1.80 |
| 15 | 2.0 | 1.50 - 1.80 |
| 16 | 2.0 | 1.50 - 1.80 |
| 18 | 2.0 | 1.50 - 1.80 |
| 20 | 2.0 | 1.50 - 1.80 |
| 22 | 2.0 | 1.50 - 1.80 |
| 26 | 3.0 | 2.40 - 2.80 |
| 28 | 3.0 | 2.40 - 2.80 |
| 32 | 3.0 | 2.20 - 2.60 |

### Production of the multilayer tube assembly using a seamless copper tube 1 having an inner diameter of 26 mm to 97.1 mm and a wall thickness of 0.50 mm to 1.50 mm

A seamless copper tube 1 (dimensions are given in Table 3) is cleaned with solvents in order to remove any traces of lubricants, and is afterwards conveyed to an induction type heater and heated inside the induction type heater in atmospheric air to a temperature of 150 °C to 250 °C. Additionally, the seamless copper tube 1 passes through a flame station comprising multiple flame nozzles around the perimeter of the tube in order to oxidise the external surface. The thickness of the oxide layer 2 is from 0.1 µm to 1.0 µm.

At this step, also the hardness of the seamless copper tube 1 is reduced.

Subsequently the annealed seamless copper 1 tube having an oxide layer 2 on its external surface is sufficiently cooled in ambient atmosphere.

The seamless copper tube 1 is then passed through a first die, where an adhesive component is extruded at an extrusion temperature of 200 °C to 230 °C through a primary extruder onto the oxide layer on the external surface of the seamless copper tube 1, in order to form an intermediate adhesive layer 3 having a thickness of 0.05 mm to 0.15 mm.

No forced cooling takes place after the extrusion of the intermediate adhesive layer 3.

The seamless copper tube 1 directly proceeds to the second die, where a polymeric component is extruded at an extrusion temperature of 210 °C to 250 °C through a secondary extruder onto the intermediate adhesive layer 3 formed in the above step, in order to form an outer polymeric layer 4. The thickness of the outer polymeric layer 4 is given in Table 4.

The second die is also called the finishing extrusion die, since it controls the final outer layer of multilayer tube assembly.

In a special embodiment, the adhesive component and the polymeric component may be co-extruded in a single extruder die.

In another special embodiment, copper oxides may be added to the outer polymeric layer 4 in order to augment its thermal conductivity up to at least 90 W/mK. The copper oxides may be incorporated in a polymeric carrier resin and may be added in the form of pellets to the polymeric component.

In a further special embodiment, external corrugations may be formed on the outer polymeric layer 4 of the multilayer tube assembly through a) specially designed extrusion dies, or b) through the use of embossed rolls after extrusion has taken place.

Subsequent to the final extrusion cooling of the multilayer tube assembly takes place in two stages. In the first stage, the multilayer tube assembly is cooled in a water bath or by water sprays at a water temperature of 30 °C to 50 °C, and in the second stage in a water bath or by water sprays at a water temperature of 8 °C to 10 °C.

After this controlled gradual cooling for the immediate hardening of the outer polymeric layer 4, the multilayer tube assembly is cut and stocked in bundles of straight lengths. The finished multilayer tube assembly may be tested electronically for possible defects (eddy currents).

**Table 3**

| multilayer tube assembly outer diameter (mm) | seamless copper tube inner diameter (mm) | seamless copper tube wall thickness (mm) |
|---|---|---|
| 40 | 34.0 | 0.50 - 0.70 |
| 50 | 43.5 | 0.60 - 0.70 |
| 63 | 55.9 | 0.70 - 0.80 |
| 75 | 66.7 | 1.00 - 1.20 |
| 90 | 79.7 | 1.30 - 1.50 |
| 110 | 97.1 | 1.40 - 1.50 |

**Table 4**

| multilayer tube assembly outer diameter (mm) | multilayer tube assembly total wall thickness (mm) | outer polymeric layer wall thickness (mm) |
|---|---|---|
| 40 | 3.00 | 2.10 - 2.60 |
| 50 | 3.25 | 2.40 - 2.70 |
| 63 | 3.55 | 2.60 - 2.90 |
| 75 | 4.15 | 2.80 - 3.20 |
| 90 | 5.15 | 3.50 - 3.90 |
| 110 | 6.45 | 4.80 - 5.10 |

### Adhesive component

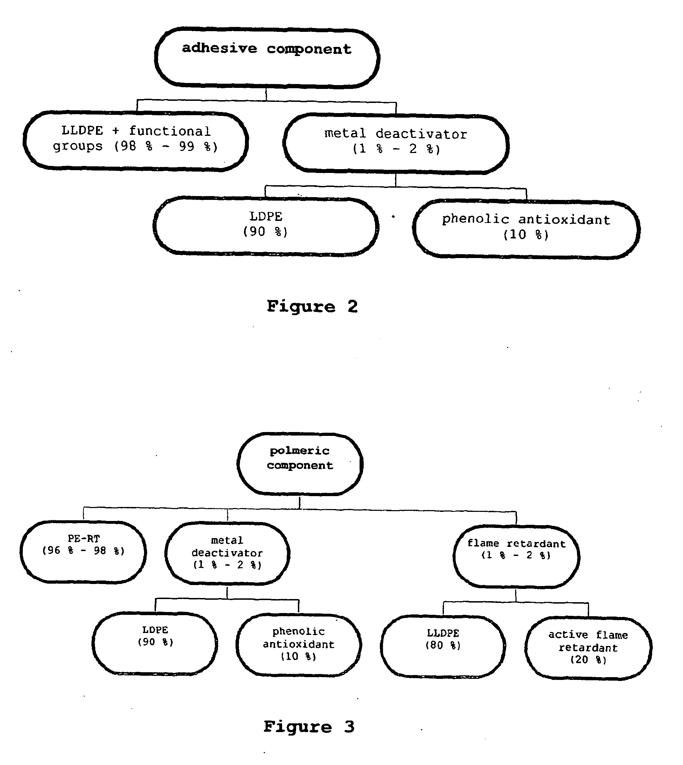

The adhesive component is a mix of linear low density polyethylene (LLDPE) and a metal deactivator additive at a concentration of 1 % to 2 %. The metal deactivator additive is a component itself of low density polyethylene (LDPE) and a phenolic antioxidant at a concentration of 10 % (see Figure 2).

The adhesive component forming the intermediate adhesive layer 3 has maleic anhydride functionality that imparts polar characteristics to the non-polar PE base resin. Maleic anhydride bonds to metal substrates by creating both covalent and hydrogen bonds. Metal substrates generate oxides on the surface. These oxides are further hydrolysed with water to form hydroxyl groups on the metal surface. Maleic anhydride creates an ester linkage (covalent bonding) to the OH groups on the surface. When maleic anhydride rings open, they generate carboxyl groups. These carboxyl groups bond to the oxides and the hydroxides on the metal surface with hydrogen bonds.

### Polymeric component

The polymeric component forming the outer polymeric layer 4 is a composition of PE-RT (polyethylene of raised temperature resistance), a metal deactivator additive and a flame retardant additive (see Figure 3).

PE-RT is an ethylene-octene copolymer specially developed for resistance to temperatures up to 95 °C.

The concentration of the metal deactivator in the polymeric component is 1 % to 2 %. The metal deactivator additive is the same as the one used in the adhesive component described above.

The concentration of the flame retardant additive in the polymeric component is 1 % to 2 %. The flame retardant additive is a composition of linear low density polyethylene (LLDPE) and an organic halogen-free flame retardant at a concentration of 20 %.

### Metal deactivator

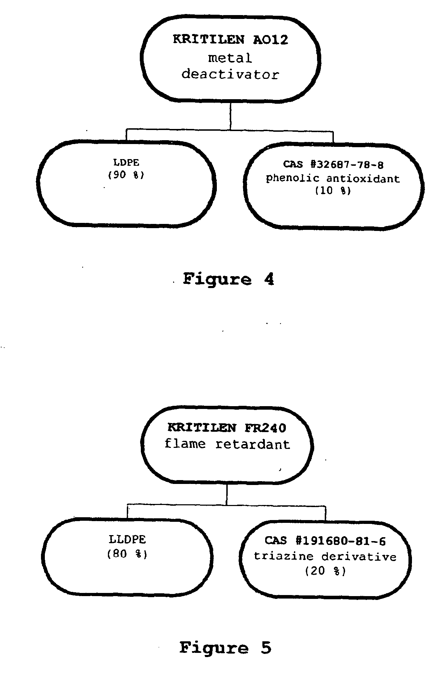

The trade name of the metal deactivator additive is KRITILEN AO12. The metal deactivator composition is shown in Figure 4.

The active ingredient is a phenolic antioxidant 3-(4-hydroxy-3,5-ditert-butyl-phenyl)-N'-[3-(4-hydroxy-3,5-ditert-buty 1-phenyl)propanoyllpropanehydrazide (CAS Number 32687-78-8) having the structural formula given below.

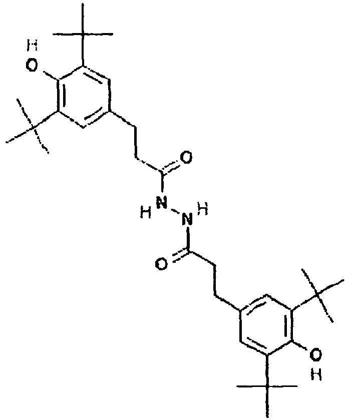

Polymers that come into contact with metals having low oxidation potentials, such as copper, are susceptible to oxidation from the metal catalysed decomposition of hydroperoxides. This is because ions of copper are very active catalysts for hydroperoxide decomposition. Kritelen A012 is a phenolic antioxidant that interrupts the oxidation process by binding ions into stable complexes though the donation of reactive hydrogen and deactivates them.

### Flame retardant

The trade name of the flame retardant additive is KRITILEN FR240. The flame retardant additive is a composition of linear low density polyethylene (LLDPE) and an organic halogen free flame retardant at a concentration of 20 % as shown in Figure 5.

The active ingredient is a triazine derivative having the chemical name according to CAS: 1,3-Propanediamine, N,N"-1,2-ethanediylbis-, reaction products with cyclohexane and peroxidized N-butyl-2,2,6,6-tetramethyl-4-piperidinamine-2,4,6-trichloro-1,3,5-triazine reaction products

### Advantages and effects of the invention

By the multilayer tube assembly of the present invention the advantages of copper, such as mechanical strength, endurance at high temperatures, stability at high work pressures, long service life, and the like, are combined with the beneficial properties of the polymeric component such as durability against corrosive environment as well as resistance to external mechanical damages.

The improvement of its properties is moreover achieved by the strong bond of the polymeric component to the seamless copper tube by means of the adhesive component used between them, thereby behaving like a single body.

In such a way, the seamless copper tube 1 carrying most of the important mechanical properties of the multilayer tube assembly can provide the same with a "shape memory", this is, it can be easily formed by bending and maintaining its shape without the application of significant manual strength. Moreover, due to the polymeric component the multilayer tube assembly attains additional strength against temperature fluctuations as well as thermal shock when used, for instance, in heating installations.

In addition to the advantageous features of the oxide layer 2, the metal deactivator additive and the flame retardant additive, the quality of the outer polymeric layer 4 exhibits a particular advantageous effect, because the PE-RT compound is specially developed to resist service temperatures up to 95 °C. This makes the resulting multilayer tube assembly best suited for long term use in heating systems.

The addition of copper oxides to the outer polymeric layer 4 augments its thermal conductivity up to 90 W/mK. Thereby, the efficiency of under-floor heating systems is increased. Moreover, the provision of external corrugations on the outer polymeric layer 4 of the multilayer tube assembly increases the area though which heat transfer takes place, enhancing therefore the efficiency of under-floor heating systems.

### INDUSTRIAL APPLICABILITY

The multilayer tube assembly of the present invention is suitable for sanitary and heating installations. In cooling applications (conditioners) it avoids the risk of condensation on the cold metallic surface of the multilayer tube assembly, is highly suitable for under-floor heating, because of the use of the special polymeric component on the external surface as well as of the special adhesive component, heating of high energy efficiency is achieved. This multilayer tube assembly is also suitable for gas installations (coolants, fuels and natural gas).

The multilayer tube assembly of the present invention is also designed in a way to favour heat exchange in under-floor heating systems.

This multilayer tube assembly can have a length ranging between 2 m and 300 m, an outside diameter between 14 mm and 110 mm and a wall thickness ranging between 2.00 mm and 6.45 mm

The multilayer tube assembly of the present invention meets the requirements of the "NSF-standard 61", and is therefore suitable for use in drinking water networks.

## Claims

1. A multilayer tube assembly comprising:
a seamless copper tube (1) provided on its external surface with an oxide layer (2) having a thickness of 0.1 µm to 1 µm;
at least one intermediate adhesive layer (3) on said oxide layer (2) consisting basically of LLD-PE and containing 1 wt.-% to 2 wt.-% of an additive metal deactivator; and
at least one outer polymeric layer (4) provided on said intermediate adhesive layer (3) and consisting mainly of a high-molecular polymeric material and 2 wt.-% to 4 wt.-% of an additive flame retardant.

2. The multilayer tube assembly according to claim 1, wherein the surface roughness Rₐ of said oxide layer (2) is 200 nm to 900 nm.

3. The multilayer tube assembly according to claims 1 or 2, wherein said oxide layer (2) is obtainable by
a) oxidising a seamless copper (1) tube having an inner diameter less than 26 mm in an atmosphere of nitrogen and air at a temperature of 550 °C to 700 °C, or
b) oxidising a seamless copper tube (1) having an inner diameter larger than 26 mm in atmospheric air at a temperature of 150 °C to 250 °C and in a flame station comprising multiple flame nozzles around the perimeter of said tube.

4. The multilayer tube assembly according to any of claims 1 to 3, wherein said intermediate adhesive layer (3) has a layer thickness in the range from 0.05 mm to 0.15 mm.

5. The multilayer tube assembly according to any of claims 1 to 4, wherein said metal deactivator is a phenolic oxidant.

6. The multilayer tube assembly according to any of claims 1 to 5, wherein said flame retardant is a triazine derivative.

7. The multilayer tube assembly according to any of claims 1 to 6, wherein said outer polymeric layer (4) has a layer thickness in the range from 1.5 mm to 5,1 mm.

8. The multilayer tube assembly according to any of claims 1 to 7, wherein copper oxides are added to said outer polymeric layer (4) to augment the thermal conductivity of said outer polymeric layer (4) to at least 90 W/mK.

9. The multilayer tube assembly according to any of claims 1 to 8, wherein external corrugations are formed in said outer polymeric layer (4) by
a) specially designed extrusion dies, or
b) the use of embossed rolls after extrusion has taken place.

10. A method for producing a multilayer tube assembly comprising the steps of:
cleaning said seamless copper (1) tube with an oxidising agent;
oxidising the external surface of said seamless copper tube (1) a) having an inner diameter less than 26 mm in an atmosphere of nitrogen and air at a temperature range of 550 °C to 700 °C, or b) having an inner diameter larger than 26 mm in atmospheric air at a temperature of 150 °C to 250 °C and in a flame station comprising multiple flame nozzles around the perimeter of said tube;
extruding said intermediate adhesive layer (3) onto said seamless copper tube (1) at a temperature range of 200 °C to 230 °C; and
extruding said outer polymeric layer (4) onto said intermediate adhesive layer (3) at a temperature range of 210 °C to 250 °C.

## Patentansprüche

1. Mehrschichtrohranordnung, die umfasst:
ein nahtloses Kupferrohr (1), das auf seiner außenliegenden Oberfläche mit einer Oxidschicht (2), die eine Dicke von 0,1 µm bis 1 µm aufweist, ausgestattet ist;
zumindest eine intermediäre Adhesivschicht (3) auf der Oxidschicht (2), die im Wesentlichen aus LLD-PE besteht und die 1 Gew.-% bis 2 Gew.-% eines additiven Metalldeaktivators beinhaltet; und
zumindest eine äußere polymere Schicht (4), die auf der intermediären Adhesivschicht (3) bereitgestellt ist und die überwiegend aus einem hochmolekularen polymeren Material und 2 Gew.-% bis 4 Gew.-% eines additiven Flammenhemmstoffs besteht.

2. Mehrschichtrohranordnung nach Anspruch 1, wobei die Oberflächenrauheit Rₐ der Oxidschicht (2) 200 nm bis 900 nm ist.

3. Mehrschichtrohranordnung nach Ansprüchen 1 oder 2, wobei die Oxidschicht (2) erhältlich ist durch
a) Oxidieren eines nahtlosen Kupferrohrs (1), das einen Innendurchmesser von weniger als 26 mm aufweist, in einer Atmosphäre aus Stickstoff und Luft bei einer Temperatur von 550°C bis 700°C, oder
b) Oxidieren eines nahtlosen Kupferrohrs (1), das einen Innendurchmesser größer als 26 mm aufweist, in atmosphärischer Luft bei einer Temperatur von 150°C bis 250°C und in einer Flammenstation, die mehrere Flammdüsen um den Perimeter des Rohrs umfasst.

4. Mehrschichtrohranordnung nach einem der Ansprüche 1 bis 3, wobei die intermediäre Adhesivschicht (3) eine Schichtdicke in dem Bereich von 0,05 mm bis 0,15 mm aufweist.

5. Mehrschichtrohranordnung nach einem der Ansprüche 1 bis 4, wobei der Metalldeaktivator ein phenolisches Oxidationsmittel ist.

6. Mehrschichtrohranordnung nach einem der Ansprüche 1 bis 5, wobei der Flammenhemmstoff ein Triazinderivat ist.

7. Mehrschichtrohranordnung nach einem der Ansprüche 1 bis 6, wobei die äußere polymere Schicht (4) eine Schichtdicke in dem Bereich von 1,5 mm bis 5,1 mm aufweist.

8. Mehrschichtrohranordnung nach einem der Ansprüche 1 bis 7, wobei Kupferoxide zu der äußeren polymeren Schicht (4) gegeben werden, um die thermische Leitfähigkeit der äußeren polymeren Schicht (4) auf zumindest 90 W/mK zu steigern.

9. Mehrschichtrohranordnung nach einem der Ansprüche 1 bis 8, wobei außenliegende Riffelungen in der äußeren polymeren Schicht (4) durch
a) speziell entworfene Extrusionsformen, oder
b) die Verwendung von geprägten Rollen, nachdem Extrusion stattgefunden hat,
gebildet sind.

10. Verfahren zur Herstellung einer Mehrschichtrohranordnung, das die Schritte umfasst von:
Reinigen des nahtlosen Kupferrohrs (1) mit einem oxidierenden Agens;
Oxidieren der außenliegenden Oberfläche des nahtlosen Kupferrohrs (1) a) das einen Innendurchmesser von weniger als 26 mm aufweist in einer Atmosphäre aus Stickstoff und Luft in einem Temperaturbereich von 550°C bis 700°C, oder b) das einen Innendurchmesser größer als 26 mm aufweist, in atmosphärischer Luft bei einer Temperatur von 150°C bis 250°C und in einer Flammenstation, die mehrere Flammdüsen um den Perimeter des Rohrs umfasst;
Extrudieren der intermediären Adhesivschicht (3) auf das nahtlose Kupferrohr (1) in einem Temperaturbereich von 200°C bis 230°C; und
Extrudieren der äußeren polymeren Schicht (4) auf die intermediäre Adhesivschicht (3) in einem Temperaturbereich von 210°C bis 250°C.

## Revendications

1. Ensemble tube multicouche comprenant :
un tube en cuivre sans soudure (1) pourvu, sur sa surface externe, d'une couche d'oxyde (2) ayant une épaisseur allant de 0,1 µm à 1 µm ;
au moins une couche adhésive intermédiaire (3) sur ladite couche d'oxyde (2) constituée principalement de LLD-PE et contenant, en poids, 1% à 2% d'un additif désactivateur de métaux ; et
au moins une couche polymère externe (4) prévue sur ladite couche adhésive intermédiaire (3) et constituée principalement d'un matériau polymère de poids moléculaire élevé et de 2 % à 4 % en poids d'un additif ignifuge.

2. Ensemble tube multicouche selon la revendication 1, dans lequel la rugosité de surface Rₐ de ladite couche d'oxyde (2) est de 200 nm à 900 nm.

3. Ensemble tube multicouche selon la revendication 1 ou 2, dans lequel ladite couche d'oxyde (2) peut être obtenue
a) par oxydation d'un tube en cuivre sans soudure (1) ayant un diamètre interne inférieur à 26 mm dans une atmosphère d'azote et d'air à une température allant de 550 °C à 700 °C, ou
b) par oxydation d'un tube en cuivre sans soudure (1) ayant un diamètre interne supérieur à 26 mm dans une atmosphère d'air à une température allant de 150 °C à 250 °C et dans un poste à flamme comprenant plusieurs buses de flamme autour du périmètre dudit tube.

4. Ensemble tube multicouche selon l'une des revendications 1 à 3, dans lequel ladite couche adhésive intermédiaire (3) présente une épaisseur de couche se trouvant dans la plage allant de 0,05 mm à 0,15 mm.

5. Ensemble tube multicouche selon l'une des revendications 1 à 4, dans lequel ledit désactivateur de métaux est un antioxydant phénolique.

6. Ensemble tube multicouche selon l'une des revendications 1 à 5, dans lequel ledit ignifuge est un dérivé de triazine.

7. Ensemble tube multicouche selon l'une des revendications 1 à 6, dans lequel ladite couche polymère externe (4) présente une épaisseur de couche se trouvant dans la plage allant de 1,5 à 5,1 mm.

8. Ensemble tube multicouche selon l'une des revendications 1 à 7, dans lequel des oxydes de cuivre sont ajoutés à ladite couche polymère externe (4) afin d'augmenter sa conductivité thermique jusqu'à au moins 90 W/mK.

9. Ensemble tube multicouche selon l'une des revendications 1 à 8, dans lequel des ondulations externes sont formées dans ladite couche polymère externe (4) par
a) des filières d'extrusion spécialement conçues, ou
b) l'utilisation de rouleaux gaufrés après que l'extrusion a eu lieu.

10. Procédé de production d'un ensemble tube multicouche comprenant les étapes qui consistent :
à nettoyer ledit tube en cuivre sans soudure (1) avec un agent oxydant ;
à oxyder la surface externe dudit tube en cuivre sans soudure (1) a) ayant un diamètre interne inférieur à 26 mm dans une atmosphère d'azote et d'air à une température allant de 550 °C à 700 °C, ou b) ayant un diamètre interne supérieur à 26 mm dans une atmosphère d'air à une température allant de 150 °C à 250 °C et dans un poste à flamme comprenant plusieurs buses de flamme autour du périmètre dudit tube ;
à extruder ladite couche adhésive intermédiaire (3) sur ledit tube en cuivre sans soudure (1) à une température allant de 200 °C à 230 °C; et
à extruder ladite couche polymère externe (4) sur ladite couche adhésive intermédiaire (3) à une température allant de 210 °C à 250 °C.
